Europäisches Patentamt

European Patent Office

Office européen des brevets

(11) Veröffentlichungsnummer: **0 303 034 B1**

(12) **EUROPÄISCHE PATENTSCHRIFT**

(45) Veröffentlichungstag der Patentschrift: **26.08.92**

(21) Anmeldenummer: **88110265.1**

(22) Anmeldetag: **28.06.88**

(51) Int. Cl.⁵: **B07B 4/02**, B03B 9/06

(54) **Verfahren zur Müllsortierung und Müllsortiervorrichtung.**

(30) Priorität: **12.08.87 DE 3726808**

(43) Veröffentlichungstag der Anmeldung:
**15.02.89 Patentblatt 89/07**

(45) Bekanntmachung des Hinweises auf die
Patenterteilung:
**26.08.92 Patentblatt 92/35**

(84) Benannte Vertragsstaaten:
**AT CH FR LI NL**

(56) Entgegenhaltungen:
**EP-A- 0 022 945**
**EP-A- 0 070 264**
**CH-A- 474 295**

(73) Patentinhaber: **Paal's Packpressen-Fabrik
GmbH & Co. KG
Raiffeisenstrasse 15-17
W-4504 Georgsmarienhütte(DE)**

(72) Erfinder: **Westerfeld, Manfred
Mörikeweg 1
W-4500 Osnabrück(DE)**

(74) Vertreter: **Busse & Busse Patentanwälte
Postfach 1226 Grosshandelsring 6
W-4500 Osnabrück(DE)**

Rank Xerox (UK) Business Services

EP 0 303 034 B1

## Beschreibung

Die Erfindung betrifft ein Verfahren zur Müllsortierung nach dem Oberbegriff des Anspruchs 1 sowie eine Müllsortiervorrichtung zur Durchführung des Verfahrens.

Zur Sortierung von Müll mit dem Ziel, wiederverwertbare Bestandteile rückzugewinnen und alles übrige möglichst unkritisch und kostensparend beseitigen zu können, haben sich kombinierte Verfahren bewährt, bei denen verschiedene Maßnahmen zum Trennen des Materialgemisches wie etwa das Sieben nach Größenordnungen, die Magnetabscheidung ferromagnetischer Bestandteile und nicht zuletzt das Verlesen von Hand Anwendung finden. Für die Effektivität der verschiedenen Maßnahmen ist es allerdings wichtig, daß der zu bearbeitende Müllstrom schon vorher durch Aussondern nicht in Betracht kommender Bestandteile reduziert wird.

Aufgabe der Erfindung ist es dementsprechend, ein Verfahren zur Müllsortierung sowie eine Vorrichtung hierfür zu schaffen, mit Hilfe derer eine frühzeitige Aufspaltung von Müllströmen möglich wird, so daß die maschinelle Sortierung wie auch das Verlesen von Hand nachfolgend mit besserer Effektivität durchgeführt werden kann.

Gemäß der Erfindung wird diese Aufgabe von einem Verfahren nach dem Oberbegriff des Anspruchs 1 ausgehend mit den kennzeichnenden Merkmalen dieses Anspruchs gelöst. Weiterhin wird die Erfindung von einer Müllsortiervorrichtung zur Durchführung des Verfahrens nach Anspruch 1 ausgehend mit den kennzeichnenden Merkmalen des Anspruchs 2 gelöst.

Die Erfindung trägt der Erkenntnis Rechnung, daß flächige und leichte Bestandteile einen wesentlichen Teil des Mülls ausmachen. Dies gilt insbesondere dann, wenn der Müll zumindest großenteils gewerbliche Abfälle enthält. In solchen Fällen läßt sich der Müllstrom zielgerecht aufspalten, wenn flächige, leichtere Bestandteile, wie Papier, Pappe, Holz- oder Kunststoffplatten, Textilien u. dgl. frühzeitig ausgesondert werden. Dies wird durch die Steilfläche ermöglicht, gegen die derartige Materialien angesaugt werden und an der sie dann haften, während andere, insbesondere schwere Materialien wie Flaschen, aber auch leichtere körperliche Gegenstände wie Kunststoffbehälter, nach unten fallen. Gleichzeitig kann eine Absaugung staubiger oder feiner Partikel durch die Steilfläche hindurch einen dritten Absonderungszweig bewirken.

Damit lassen sich Papier, Pappe und flächiger, insbesondere großflächiger Abfall aus dem Müllstrom herausziehen und - ggf. nach weiterer Siebung oder sonstiger Klassierung - rückgewinnen.

Gleichzeitig wird der Strom des restlichen Materials, insbesondere der Flaschen und Kunststoffbehälter, überschaubar und einfacher zu sortieren. Die abgesaugten Feinpartikel werden regelmäßig in Filtern aufzufangen und in herkömmlicher Weise abzulagern sein.

Weitere Merkmale und Vorteile der Erfindung ergeben sich aus den Ansprüchen und der nachfolgenden Beschreibung, in der zwei Ausführungsbeispiele des Gegenstands der Erfindung anhand einer Zeichnung näher erläutert sind. In der Zeichnung zeigen in jeweils schematisierter Wiedergabe:

Fig. 1     schnittbildliche Seitenansicht einer ersten Müllsortiervorrichtung,

Fig. 2     schnittbildliche Seitenansicht einer zweiten Müllsortiervorrichtung und

Fig. 3     Schnitt nach Linie III-III in Fig. 2.

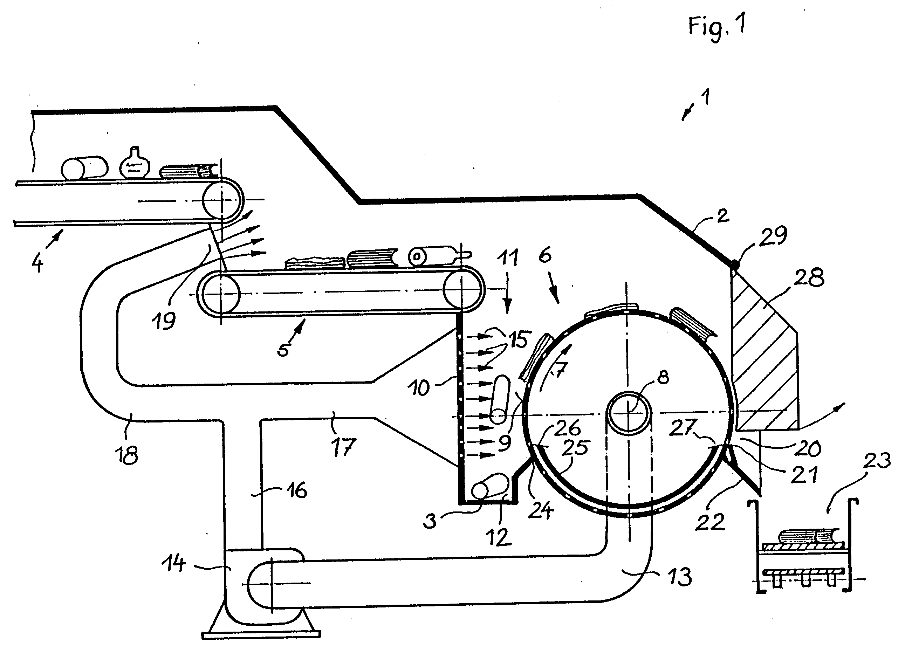

Die in Fig. 1 dargestellte, insgesamt mit 1 bezeichnete Müllsortiervorrichtung umfaßt in einem mit einzelnen Wänden 2,3 wiedergegebenen Gehäuse zwei hintereinandergeschaltete Bandförderer 4,5, die auf eine Siebtrommel 6 hinführen, die sich entsprechend einem Pfeil 7 in Uhrzeigerrichtung und somit auf der den Zuförderern 4,5 zugewandten Seite um eine waagerechte Drehachse 8 aufwärts dreht.

In diesem Bereich des Aufwärtsdrehens, der nachfolgend als Steilfläche 9 bezeichnet werden soll, steht die Siebtrommel 6 einer Siebwand 10 gegenüber und zwischen beiden ist ein Fallschacht 11 ausgebildet, der unterseitig in einer Förderrinne 12 endet.

Die Siebtrommel 6 ist innenseitig über ein Saugrohr 13 mit der Saugseite eines Gebläses 14 verbunden und damit in der Lage, im Fallschacht 11 niedergehendes Material anzusaugen und jedenfalls dann anhaftend nach oben zu fördern, wenn dieses Material flächig und, bezogen auf die Anlagefläche, nicht zu schwer ist. Schwerere und insbesondere nicht flächig ausgebildete Materialstücke in einem über die Förderer 4 und 5 zugeführten Müllstrom vermögen sich an der Siebtrommel nicht zu halten und fallen in die Förderrinne 12, von wo sie in einer üblichen Weise abtransportiert werden.

Um die Trennfunktion der Vorrichtung zu intensivieren, wird ein gerichteter Querluftstrom entsprechend den Pfeilen 15 hindurch von der Siebwand 10 zur Steilfläche 9 hin ausgebildet, wobei ein Gebläsekanal 16,17 druckseitig von dem Gebläse 14 zu der Siebwand hinführt und diese mit Blasluft beaufschlagt.Der insoweit geschlossene Umluftkanal 13,16,17 hat überdies den Vorteil, daß die mit Feinparatikeln belastete Luft nicht mit der Außenluft vermischt wird und die Verschmutzungen nicht nach außen gelangen. Insoweit kommt es nicht auf die Wirksamkeit von Filtern an, die (nicht eingezeichnet) in der Saugleitung 13 vorgesehen sind.

Eine Zweigleitung 18 führt von der Druckleitung 16 zu einer Mündung 19, vor der das zugeführte Material von dem Förderer 4 auf den Förderer 5 fällt. Eine Blaseinwirkung an dieser Stelle hat die Wirkung, daß das Material bewegt und entmischt wird. Dieses fördert gleichfalls den Wirkungsgrad der an der Siebtrommel 6 vorgesehenen Trennung.

Das von der Siebtommel 6 aus dem fallenden Materialstrom abgezogene flächige Material wird auf der der Steilfläche 9 abgelegenen Seite im Bereich einer Auswurföffnung 20 ausgetragen, wobei eine Abstreifkante 21 an einer Rutsche 22 dicht an die Siebtrommel 6 heranführt. Das abgestreifte und niederrutschende Material gelangt in eine Förderrinne 23 und geht somit einen anderen Weg an das in die Förderrinne 12 niederfallende Material.

Zwischen der Abstreifkante 21 und einer eng an die Siebtrommel herangeführten Abschlußkante 24 des Gehäuseteils 3 verläuft die Siebtrommel 6 außerhalb des Gehäuses. Um in diesem Bereich eine unerwünschte Ansaugung von Außenluft zu unterbinden, ist auf der Trommelinnenseite eine Abdeckung 25 angeordnet, die den vorgenannten Bereich schließt und endseitig mit Dichtkanten 26,27 an der Siebtrommel anliegt. Dabei ist es für ein Auswerfen des Materials zur Förderrinne 23 hin durchaus erwünscht, daß die Saugwirkung im Bereich der Abstreifkante 21 entfällt. In diesem Sinne kann die Abdeckung 25 mitsamt der Abstreifkante 27 auch noch (maximal etwa bis zur Vertikalebene durch die Achse 8) hochgezogen werden.

Im vorliegenden Fall wird die auf der rechten Trommelseite belassene Saugwirkung dazu verwandt, eine Klappe 28 gegen die Siebtrommel anzuziehen. Die Anlage wird auch durch das Eigengewicht der Klappe verbessert, deren Schwerpunkt in der Zeichnung insgesamt rechts von einem Scharnier 29 als Verbindung zu der Gehäusewand 2 liegt. Mit dieser Klappe wird der großflächige Eintritt von Fehlluft unterbunden, gleichzeitig aber der Auswurf von Material gesichert. Insgesamt stellt die Vorrichtung 1 ein hinsichtlich der Luftführung weitgehend geschlossenes System dar.

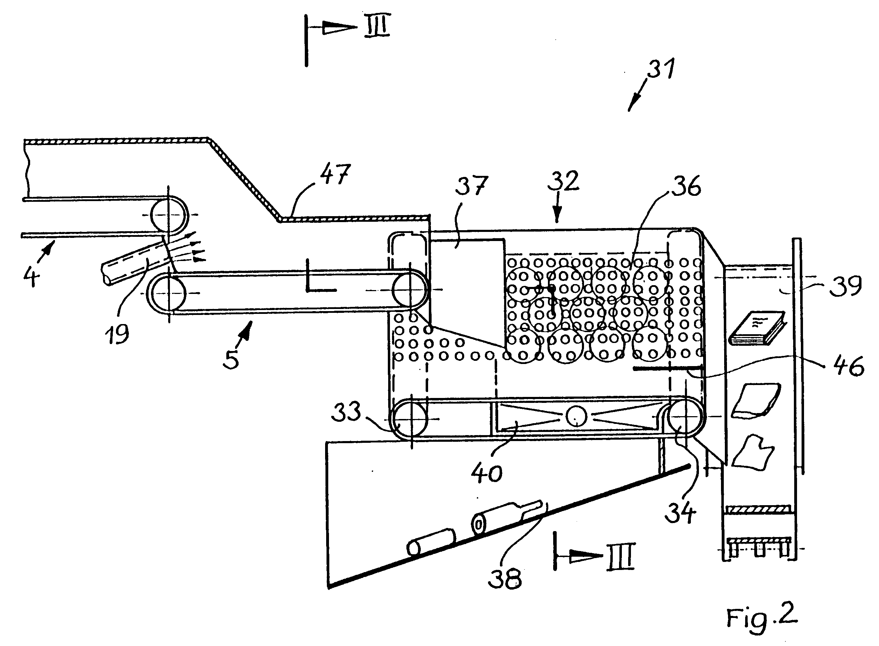

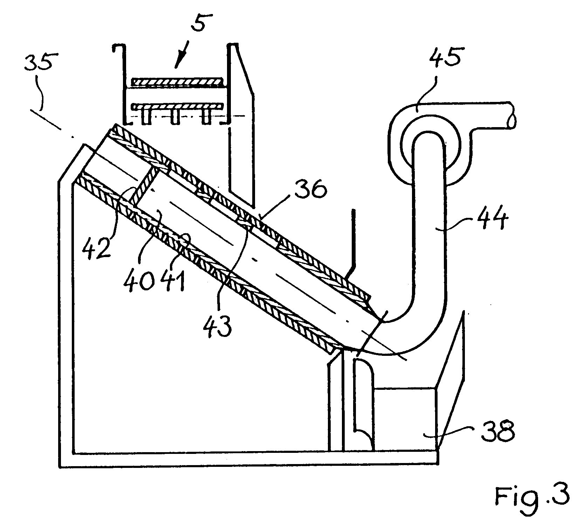

Die in den Fig. 2 und 3 dargestellte, insgesamt mit 31 bezeichnete Vorrichtung stellt gegenüber oben anhand der Fig. 1 beschriebenen Vorrichtung 1 eine Abwandlung insofern dar, als diese keine Siebtrommel mit horizontaler Achse, sondern ein Förderband 32 verwendet, das zwischen zwei Rollen 33,34 mit (zueinander parallelen) schrägen, nämlich seitlich geneigten Achsen umläuft (vgl. Achse 35 in Fig. 3). Das Förderband 32 bildet mit seiner schrägen Oberfläche eine Steilfläche 36 mit mehreren Förderrichtungen, indem über Zuförderer 4 und 5 (entsprechend denen in Fig. 1) von links nach rechts ankommendes und über ein Leitblech 37 auf die Steilfläche 36 aufgebrachtes Material zum einen entsprechend der Fallinie quer in eine Förderrinne 38 abgleiten oder vor allem abrollen kann, während am Förderer anhaftends Material nach rechts in eine zweite Förderrinne 39 transportiert wird. Ein dritter Materialstrom feinen Leichten, insbesondere staubigen Materials ist durch die perforierte Steilfläche hindurch gegeben.

Auch hier ist für den Transport des Feinmaterials und insbesondere für das Separieren flächigen Materials aus dem Materialstrom vorgesehen, daß die Steilfläche 36 rückwärtig mit Saugluft beaufschlagt wird.

Aus Fig. 3 wird mit einem Schnitt durch das Förderband 32 sichtbar, daß dieses einen feststehenden Saugkasten 40 umschließt, der auf mehreren Seiten geschlossene Wandungen 41,42 aufweist, zur Steilfäche 36 hin aber eine stützfläche 43 mit großflächigen Öffnungen aufweist. Der Saugkasten 40 mündet in eine Saugleitung 44 zu einem Gebläse 45 hin ein.

Die Funktion der Vorrichtung 31 unterscheidet sich von der der Vorrichtung 1 darin, daß das Material nicht im freien Fall aus einem Materialstrom abgesaugt wird, sondern daß es auf die Steilfläche aufgeschüttet wird, von wo es entweder unter der Saugwirkung des Luftstroms durch die steilfläche 36 hindurch anhaftet oder aber schräg abrollt bzw. abrutscht. Der Trennungswirkung dient dabei auch eine Führungsschiene 46 an dem hinteren und unteren Ende der Steilfläche, die dafür sorgt, daß sich ablösendes Flächenmaterial noch in die Förderrinne 39 gelangt.

Unabhängig von der Sortierfunktion der Vorrichtung sind die Unterschiede in der Luftführung zu betrachten. Der Saugkasten 40 übernimmt dabei zum einen die Funktion der Abdeckung 25 bei der Vorrichtung gemäß Fig. 1, gestattet dabei aber in Verbindung mit einem Förderband eine einfache konstruktive Auslegung. Die Vorrichtung 31 ist auch nicht hermetisch durch ein Gehäuse gekapselt. Ein Gehäuseteil 47 endet vor der Steilfläche 36 des Förderbandes 32 und beschränkt sich im wesentlichen auf Luftführungsfunktionen hinsichtlich der Gebläseausmündung 19. Diese Ausführungsform erzielt zwar keinen hermetischen Abschluß der Luftführung, gestattet aber dafür einen Einfachaufbau der Vorrichtung unter Verzicht auf kritische Abdichtungen.

Der Neigungswinkel der Steilfläche 36 liegt im dargestellten Fall bei 35°, was in den meisten Anwendungsfällen ausreicht. Bei Materialien mit schlechten Gleiteigenschaften können steilere Winkel, etwa 45° und höher vorgesehen werden.

In beiden beschriebenen Ausführungsformen wird ein Gebläse mit hoher Saugleistung von beispielsweise 20.000 m³ pro Stunde vorgesehen. Für die Größe der wirksamen Steifläche ist eine Breite von mehr als 0,5m, zweckmäßig etwa 1 m vorzusehen und eine Länge von mehr als 0,5m zweckmäßig 1,5 m. Der Lochanteil der Siebfläche ist dabei mit mehr als 50% vorausgesetzt. Es versteht sich, daß hierzu neben Siebbändern auch Drahtgewebegurte, Einzelgurte oder Querlattengurte Anwendung finden können. Auch hinsichtlich des Saugkastens 40 stehen dem Fachmann ohne weiteres Flächenelemente zur Verfügung, die einerseits luftdurchlässig sind und andererseits eine Abstützung des Siebförderers in jedem gewünschten Umfang ermöglichen. Der Saugkasten 40 kann auch Filtermaterial oder Flächenfilter zum Abfangen staubiger Feinpartikel aufnehmen.

Bei Vorstehendem hat es sich als zweckmäßig für eine kontinuierliche Arbeitsweise herausgestellt, daß die Steilfläche beweglich, nämlich als Teil einer Siebtrommel oder eines Siebbandes, ausgebildet ist. Es versteht sich, daß grundsätzlich eine feststehende Steilfläche vorgesehen werden kann, um leichtes und flächiges Material aus einem fallenden oder rutschenden Materialstrom haftend aufzunehmen. Dieses Material ließe sich dann durch Abstreifer von der Steilfläche entfernen, desgleichen kann in einem intermittierenden Betrieb vorgesehen werden, daß nach dem Abtransport schweren oder rollenden Materials der Luftstrom durch die Steilfläche abgeschaltet oder umgekehrt wird, um danach das flächige und leichte Material abzuwerfen.

Bevorzugt wird allerdings der kontinuierliche Betrieb, bei dem die bewegliche Steilfläche eine von der Fallinie abweichend gerichtete Bewegung ausführt. Die in den Fig. 2 und 3 illustrierte Seitenneigung des Förderbandes 32 ist nur ein Beispiel für die Trennung der Bewegungsrichtungen. Vorzugsweise wird man auch hier, wie bei der Siebtrommel gemäß Fig. 1, eine Fallrichtung entgegen der Bewegungsrichtung der Steilfläche vorsehen, so daß das Förderband schräg ansteigend läuft. Dadurch wird eine von Querkräften freie Führung des Förderbandes geschaffen, eine kräftige Durcharbeitung des zu siebenden Gutes erzielt und eine Trennung der angesaugten und der abrollenden oder abrutschenden Bestandteile zu räumlich einander gegenüberliegenden Abförderungsbereichen erzielt.

**Patentansprüche**

1. Verfahren zur Müllsortierung unter Verwendung von Fördereinrichtungen in einem Förderweg über verschiedene Sortierstationen, dadurch gekennzeichnet, daß der Müll in einer in einem vorderen Teil des Förderwegs liegenden Sortierstation einem gegen eine luftdurchlässige Steilfläche gerichteten Saugluftstrom ausgesetzt wird und damit teilweise unter Saugwirkung an der Steilfläche anhaftet, teilweise unterhalb der Steilfläche aufgefangen und abgefördert wird.

2. Müllsortiervorrichtung zur Durchführung des Verfahrens nach Anspruch 1, gekennzeichnet durch eine rückseitig an die Saugseite eines Gebläses (14,45) angeschlossene Steilfläche (9,36), oberhalb der ein Förderer (5) ausmündet und unterhalb der eine Sammel- und Abfördereinrichtung (12,38) angeordnet ist.

3. Müllsortiervorrichtung nach Anspruch 2, dadurch gekennzeichnet, daß die Steilfläche (9,36) in einer von der Fallrichtung abweichenden Bewegungsrichtung (7) beweglich ausgebildet ist.

4. Müllsortiervorrichtung nach Anspruch 3, dadurch gekennzeichnet, daß die Steilfläche (9) die Oberfläche einer Siebtrommel (6) bildet, deren Innenraum mit der Saugseite eines Gebläses (14) in Verbindung steht.

5. Müllsortiervorrichtung nach Anspruch 4, dadurch gekennzeichnet, daß die Siebtrommel (6) um eine vorwiegend waagerechte Achse (8) umläuft.

6. Müllsortiervorrichtung nach Anspruch 5, dadurch gekennzeichnet, daß die Steilfläche (9) an der Siebtrommel (6) in einem aufwärts drehenden Bereich ausgebildet ist.

7. Müllsortiervorrichtung nach Anspruch 5 oder 6, dadurch gekennzeichnet, daß die Siebtrommel (6) in einem außerhalb der Steilfläche (9) liegenden Bereich eine Abdeckung (25) aufweist.

8. Müllsortiervorrichtung nach Anspruch 7, dadurch gekennzeichnet, daß die Abdeckung (25) mit an der Siebtrommel anliegenden Dichtkanten (26,27) versehen ist.

9. Müllsortiervorrichtung nach Anspruch 8, dadurch gekennzeichnet, daß die Abdeckung (25) auf der Innenseite der Siebtrommel (6) verläuft.

10. Müllsortiervorrichtung nach einem der Ansprüche 5 bis 9, dadurch gekennzeichnet, daß die Siebtromel (6) von einem Gehäuse (2,3) umschlossen ist, das mit der Siebtrommel (6) auf der der Steilfläche (9) abgelegenen Seite eine mit einer Luftklappe (28) versehene Auswurföffnung (20) bildet.

11. Müllsortiervorrichtung nach Anspruch 10, dadurch gekennzeichnet, daß die Auswurföffnung (20) mit einer an die Siebtromm el heranführenden Abstreifkante (21) versehen ist.

12. Müllsortiervorrichtung nach Anspruch 10 oder 11 in Verbindung mit einem der Ansprüche 7 bis 9, dadurch gekennzeichnet, daß die Abdekkung (25) an die Auswurföffnung (20) heranreicht.

13. Müllsortiervorrichtung nach einem der Ansprüche 10 bis 12, dadurch gekennzeichnet, daß das Gehäuse mit einer der Steilfläche (9) gegenüberstehenden Siebwand (10) einen Fallschacht (11) bildet.

14. Müllsortiervorrichtung nach Anspruch 13, dadurch gekennzeichnet, daß der Fallschacht (11) unterseitig mit einer Förderrinne (12) abschließt.

15. Müllsortiervorrichtung nach Anspruch 13 oder 14, dadurch gekennzeichnet, daß die Siebwand (10) außenseitig mit Blasluft beaufschlagt ist.

16. Müllsortiervorrichtung nach einem der Ansprüche 2 bis 15, dadurch gekennzeichnet, daß sie ein Gehäuse (2,3,47) mit zumindest einem Zuförderer (4,5) umfaßt, in dessen Förderbereich eine aufwärts gerichtete Blasluftzuführung (19) angeordnet ist.

17. Müllsortiervorrichtung nach Anspruch 3, dadurch gekennzeichnet, daß die Steilfläche (36) mittels eines mit Durchbrechungen ausgestalteten Förderbandes (32) gebildet ist.

18. Müllsortiervorrichtung nach Anspruch 17, dadurch gekennzeichnet, daß das Förderband (32) seitlich geneigt ist.

19. Müllsortiervorrichtung nach Anspruch 18, dadurch gekennzeichnet, daß der Neigungswinkel des Förderbandes (32) mindestens 35°, vorzugsweise 45° beträgt.

20. Müllsortiervorrichtung nach Anspruch 17,18 oder 19, dadurch gekennzeichnet, daß das Förderband (32) als Siebband ausgebildet ist.

21. Müllsortiervorrichtung nach Anspruch 17, 18 oder 19, dadurch gekennzeichnet, daß das Förderband als Querlattengurt ausgebildet ist.

22. Müllsortiervorrichtung nach Anspruch 17, 18 oder 19, dadurch gekennzeichnet, daß das Förderband mehrsträngig aus parallellaufenden Gurten gebildet ist.

**Claims**

1. A method of sorting refuse employing conveyor means in a conveyor path extending over various sorting stations, characterised in that in a sorting station situated in a front part of the conveyor path, the refuse is exposed to a stream of suction air directed at a steep air-permeable surface, part of the refuse clinging to the steep surface as a result of the suction while some is caught beneath the steep surface and is carried away.

2. A refuse sorting apparatus for carrying out the method according to Claim 1, characterised by, connected at the rear to the suction side of a blower (14, 45), a steep surface (9, 36) above which a conveyor (5) discharges and beneath which there is a collecting and discharge arrangement (12, 38).

3. A refuse sorting apparatus according to Claim 2, characterised in that the steep surface (9, 36) is constructed to be movable in a direction of movement (7) other than the direction of fall.

4. A refuse sorting apparatus according to Claim 3, characterised in that the steep surface (9) is formed by the surface of a screening drum (6) the interior of which is connected to the suction side of a blower (14).

5. A refuse sorting apparatus according to Claim 4, characterised in that the screening drum (6) rotates about a predominantly horizontal axis (8).

6. A refuse sorting apparatus according to Claim 5, characterised in that the steep surface (9) is constructed on the screening drum (6) in an upwardly rotating zone.

7. A refuse sorting apparatus according to Claim 5 or 6, characterised in that an area of the screening drum (6) which is outside the steep surface (9) has a covering (25).

8. A refuse sorting apparatus according to Claim 7, characterised in that the covering (25) is provided with sealing edges (26, 27) which bear on the screening drum.

9. A refuse sorting apparatus according to Claim 8, characterised in that the covering (25) extends on the inside of the screening drum (6).

10. A refuse sorting apparatus according to one of the Claims 5 to 9, characterised in that the screening drum (6) is enclosed by a housing (2, 3) which forms with the screening drum (6), on the side remote from the steep surface (9), an ejector orifice (20) provided with an air flap (28).

**11.** A refuse sorting apparatus according to Claim 10, characterised in that the ejector orifice (20) is provided with a scraper edge (21) which is applied against the screening drum.

**12.** A refuse sorting apparatus according to Claim 10 or 11, in conjunction with one of Claims 7 to 9, characterised in that the covering (25) extends to the ejector orifice (20).

**13.** A refuse sorting apparatus according to one of Claims 10 to 12, characterised in that the housing forms a gravity shaft (11) with a screen wall (10) opposite the steep surface (9).

**14.** A refuse sorting apparatus according to Claim 13, characterised in that the gravity shaft (11) is closed at the bottom by a conveyor channel (12).

**15.** A refuse sorting apparatus according to Claim 13 or 14, characterised in that blown air is applied to the outside of the screening wall (10).

**16.** A refuse sorting apparatus according to one of Claims 2 to 15, characterised in that it comprises a housing (2, 3, 47) having at least one conveyor (4, 5) in the conveying portion of which there is an upwardly directed supply (19) of blown air.

**17.** A refuse sorting apparatus according to Claim 3, characterised in that the steep surface (36) is formed by a conveyor belt (32) constructed with apertures.

**18.** A refuse sorting apparatus according to Claim 17, characterised in that the conveyor belt (32) is inclined laterally.

**19.** A refuse sorting apparatus according to Claim 18, characterised in that the angle of inclination of the conveyor belt (32) amounts to at least 35° and preferably 45°.

**20.** A refuse sorting apparatus according to Claim 17, 18 or 19, characterised in that the conveyor belt (32) is constructed as a screening belt.

**21.** A refuse sorting apparatus according to Claim 17, 18 or 19, characterised in that the conveyor belt is constructed as a transverse slatted belt.

**22.** A refuse sorting apparatus according to Claim 17, 18 or 19, characterised in that the conveyor belt is formed in a plurality of strands from parallel belts.

**Revendications**

**1.** Procédé de tri de déchets utilisant des dispositifs convoyeurs suivant un chemin de transport passant par différents postes de tri, procédé caractérisé en ce qu'on expose les déchets dans un poste de tri situé dans la partie avant de la trajectoire de transfert, à un courant d'aspiration dirigé contre une surface inclinée perméable à l'air, et les déchets s'accrochent en partie contre cette surface inclinée sous l'effet d'aspiration et sont reçus et évacués partiellement en-dessous de la surface inclinée.

**2.** Dispositif de tri de déchets pour la mise en oeuvre du procédé selon la revendication 1, caractérisé par une surface en biais (9, 36) dont la face arrière est reliée au côté d'aspiration d'une machine soufflante (14, 45), et qui débouche au-dessus d'un convoyeur (5) et en-dessous d'un dispositif de collecte et d'évacuation (12, 38).

**3.** Dispositif de tri de déchets selon la revendication 2, caractérisé en ce que la surface inclinée (9, 36) est réalisée de manière mobile dans une direction de mouvement (7) différente de la direction de chute.

**4.** Dispositif de tri de déchets selon la revendication 3, caractérisé en ce que la surface inclinée (9) forme la surface d'un tambour-tamis (6) dont le volume intérieur est relié au côté aspirant d'une machine soufflante (14).

**5.** Dispositif de tri de déchets selon la revendication 4, caractérisé en ce que le tambour-tamis (6) tourne sur un axe essentiellement horizontal (8).

**6.** Dispositif de tri de déchets selon la revendication 5, caractérisé en ce que la surface inclinée (9) est réalisée dans la zone de rotation ascendante du tambour-tamis (6).

**7.** Dispositif de tri de déchets selon la revendication 5 ou 6, caractérisé en ce que le tambour-tamis (6) comporte un capot (25) dans une zone située à l'extérieur de la surface inclinée (9).

8. Dispositif de tri de déchets selon la revendication 7, caractérisé en ce que le capot (25) est muni d'arêtes d'étanchéité (26, 27) appliquées contre le tambour-tamis.

9. Dispositif de tri de déchets selon la revendication 8, caractérisé en ce que le capot (25) est prévu sur la face intérieure du tambour-tamis (6).

10. Dispositif de tri de déchets selon l'une des revendications 5 à 9, caractérisé en ce que le tambour-tamis (6) est entouré par un carter (2, 3) qui forme avec son côté opposé à la surface inclinée (9) du tambour-tamis (6), un orifice d'éjection (20) muni d'un volet d'air (28).

11. Dispositif de tri de déchets selon la revendication 10, caractérisé en ce que l'orifice d'éjection (20) est muni d'une raclette (21) appliquée contre le tambour-tamis.

12. Dispositif de tri de déchets selon la revendication 10 ou 11 en liaison avec l'une des revendications 7 à 9, caractérisé en ce que le capot (25) arrive jusqu'à l'orifice d'éjection 20.

13. Dispositif de tri de déchets selon l'une des revendications 10 à 12, caractérisé en ce que le carter forme un sas de chute (11) avec une paroi de tamis (10) opposée à la surface inclinée (9).

14. Dispositif d tri de déchets selon la revendication 13, caractérisé en ce que le sas de chute (11) est fermé dans sa partie inférieure par une goulotte d'évacuation (12).

15. Dispositif de tri de déchets selon la revendication 13 ou 14, caractérisé en ce que la paroi formant tamis (10) est alimentée par sa face extérieure avec de l'air soufflé.

16. Dispositif de tri de déchets selon l'une des revendications 2 à 15, caractérisé en ce qu'il comprend un carter (2, 3, 47) avec au moins un convoyeur d'alimentation (4, 5) et une alimentation en air soufflé (19) dirigé vers le haut dans la zone de transfert du convoyeur.

17. Dispositif de tri de déchets selon la revendication 3, caractérisé en ce que la surface inclinée (36) est formée par une bande transporteuse (32) munie de passages.

18. Dispositif de tri de déchets selon la revendication 17, caractérisé en ce que la bande transporteuse (32) est inclinée vers le côté.

19. Dispositif de tri de déchets selon la revendication 18, caractérisé en ce que l'angle d'inclinaison de la bande transporteuse (32) est au moins égal à 35° et de préférence égal à 45°.

20. Dispositif de tri de déchets selon les revendications 17, 18 ou 19, caractérisé en ce que la bande transporteuse (32) est une bande formant tamis.

21. Dispositif de tri de déchets selon les revendications 17, 18 ou 19, caractérisé en ce que la bande transporteuse est une bande à lattes transversales.

22. Dispositif de tri de déchets selon les revendications 17, 18 ou 19, caractérisé en ce que la bande transporteuse est formée de plusieurs brins formés par des bandes circulant en parallèle.

Fig.1

Fig.2

Fig.3